# EUROPEAN PATENT APPLICATION

(11) **EP 2 432 225 A1**
(43) Date of publication of application: **21.03.2012**
(21) Application number: 10251617.6
(22) Date of filing: 20.09.2010
(51) Int. Cl.: H04N 7/24, H04N 7/16, H04N 21/431, H04N 21/442, H04N 21/454, H04N 21/488, H04N 21/84, H04N 21/858

(54) **Automatic "spoiler" prevention**

(71) Applicant: Eldon Technology Limited, Steeton, Keighley BD20 6QW (GB)
(72) Inventor: Davis, Peter, BD20 6QW, West Yorkshire (GB); Thornberry, Kevin, BD20 6QW, West Yorkshire (GB)
(74) Representative: Sadler, Peter Frederick

(57) **Abstract**

A method for controlling the output of programme content from an apparatus comprising a receiver for receiving programme content and an output. The method comprises the steps of storing one or more dependencies and determining whether a programme to be output by the apparatus has any dependencies associated with it. The dependencies are indicative of whether the content of a given programme is dependent upon the content of one or more other programmes. If the programme to be output by the apparatus has any dependencies associated with it, the output of the programme content by the apparatus is impaired based on the dependencies. A corresponding apparatus and computer programme are also provided.

## Description

### Technical Field

This invention relates to a method for controlling the output of content from a device, particularly media content such as television programmes, and also to an apparatus for implementing the method.

### Background of the Invention

Modern media content, such as video and/or audio content featuring in television or radio programmes, is often provided as a set of episodes within a particular series, or in a manner in which the content of a particular programme is dependent on one or more other programmes. For example, a particular story may be told over a number of sequential episodes within a series, with the viewer needing to watch each episode in the correct order to extract maximum enjoyment. The later programmes within the series are therefore dependent upon the earlier programmes within the series because it is intended for the viewer to view the programmes in a predetermined order.

Despite advances in delivery of content such as via satellite, cable, over the Internet or any other type of broadcast, it is still easy for a user to view programme content that contains so called "spoilers". Spoiler content contained in a first programme is related to content in a second programme that has not previously been viewed by the user. Viewing the spoiler content in the first programme compromises the enjoyment of the second programme.

### Summary of the Invention

The invention is defined in the independent claims to which reference is now directed. Advantageous features are set forth in the dependent claims.

A useful feature of a set-top-box would be to detect and warn the user of certain "spoiler" events. Spoiler events may contain content that would spoil the user's enjoyment if they were to be shown it before they had viewed previous content, for example showing scenes from episode 4 of a television show before the user had seen episode 3. The set-top-box could detect these conditions and automatically stop showing the content and display a warning message/prompt.

Embodiments of the invention provide a method for controlling the output of content, such as video and/or audio content, from an apparatus comprising a receiver and output means. This may include devices such as a set-top-box, or other type of decoder that provides content to an output device such as a display, or may also include an apparatus incorporating a display such as a television. According to the method, it is determined whether a programme to be output by the apparatus has any dependencies associated with it, the dependencies being indicative of whether the content of a given programme is dependent upon the content of one or more other programmes. If such dependencies exist, the output of the programme content is impaired to prevent the user from viewing material outside a predetermined sequence.

The dependencies identify those programmes upon which the content of a given programme is dependent. They may be received by the apparatus via broadcast, and are preferably contained in programme metadata, such as a programme map table and specifically within a "programme descriptor" field. The dependencies may also be received directly from a user via an interface with the apparatus. The dependencies may also be calculated locally within the apparatus based on received data, such as data indicating the series to which programmes belong. Typically the dependencies are stored in a memory local to the apparatus.

Each programme within a series of programmes may be identified by a unique reference and the dependency field of the programme to be output by the apparatus includes a reference to one or more of any earlier programmes within the series. The step of determining whether a programme to be output by the apparatus has any dependencies associated with it may then include determining whether the programme reference for the programme to be output has associated with it, in the relevant dependency field, any other programme references corresponding to earlier programmes in a series.

The method may further comprise storing, in a memory, data indicative of whether a programme has been watched by a user. The further step can then be taken of determining whether the programmes referenced by the dependencies of the programme to be output by the apparatus have been viewed or listened to, based on the stored data. If the programmes referred to by the dependencies of the programme to be output have been viewed or listened to, output of the programme content is not impaired, since the user has already viewed these earlier programmes. Determining whether the programmes associated with the dependencies of the programme to be output have been watched may comprise the steps of monitoring programme data being received by broadcast or requested from a storage device and storing data indicating a particular programme has been viewed or listened to when programme data of a particular programme has been output for a predetermined amount of time.

Impairing the output of the apparatus may include the step of outputting a warning that covers or obscures all or part of the spoiler content and indicates that the programme the user is attempting to watch includes dependencies. The user could then be given the option to allow them to output the programme content anyway, or select alternative content to experience. The method may alternatively, or additionally, include the step of time delaying the output of the programme content by storing the content on a storage device, such as a local hard drive, such that it can be output by the apparatus at a later time, particularly once the programmes referred to by the dependencies have been watched. Rather than recording content for later viewing, the method may include determining whether the one or more other programmes associated with the dependencies of the first programme are stored on a storage device accessible by the apparatus, or identified in an electronic programme guide as being broadcast within a predetermined period of time. If so then the user could be provided with the option to access the one or more other programmes rather than watch the spoiler material.

Embodiments of the invention also provide a corresponding apparatus for outputting programme content, such as a set-top-box, television or other type of decoder and carrying out the inventive methods described herein. An embodiment of the apparatus comprises one or more inputs for receiving programme content, an output for providing programme content to an output device such as a display, and a processor configured to determine whether a programme to be output by the apparatus to the output device has any dependencies associated with it. A restriction circuit is provided for impairing the output of programme content based on the dependencies, such that it is not displayed by the output device, based on the dependencies. The function of the restriction circuit may be handled by the processor and as such they may be the same component.

The apparatus preferably includes a memory for storing the dependencies, which may be received by the apparatus via the one or more inputs via broadcast or from the user, or may be determined within the apparatus.

In particular, the apparatus may be contained within a set-top-box, television, mobile phone, PDA, computer or audio device, or any other device capable of outputting media programme content.

Embodiments of the invention may be realised as a computer programme, or computer programme residing on a storage medium, which when executed by a suitable apparatus, such as a set-top-box, television, computer, mobile communications device, PDA or similar, will cause the device to undertake the steps in the inventive method described herein.

### Brief Description of the Drawings

Examples of the invention will now be described in more detail, with reference to the drawings in which:
Figure 1 is a table showing an example of dependencies between programmes;
Figure 2 is a table showing a further example of dependencies between programmes;
Figure 3 is a flow diagram showing the method undertaken in relation to the embodiments of the invention;
Figure 4 is a table showing a further example of dependencies between programmes; and
Figure 5 is a diagram of a set-top-box suitable for implementing embodiments of the invention.

### Detailed Description of the Preferred Embodiments

A first embodiment of the invention will be described in relation to a programme series extending over several episodes. In this embodiment a programme series includes media content that is intended to be viewed by users in a particular order.

Typically when a user attempts to view a service, event, or programme content via a set-top-box, or similar device, they will instruct the set-top-box to tune to the desired channel using an interface, such as buttons on the set-top-box itself, or an interface device such as a remote control. It should also not be discounted that the programme that the user wishes to view is on the same channel currently being output by the set-top-box. As a new programme is about to be output to the display device a series of checks may be performed. This may include a parental lock check that determines whether a programme has a particular rating assigned to it that the set-top-box has been set not to output without password authorisation.

Media content such as television shows are broadcast with accompanying metadata. The metadata comprises data about the programmes being broadcast, including a number of data fields containing information such as programme length, start time, programme description, title and rating. The metadata will also usually contain a unique reference number that indentifies the programme in question. Where a programme belongs to a series of programmes, the metadata may identify the series and the position of the programme within the series. This could be accomplished using an additional series reference number or by using the unique programme reference number if, for example, each episode in a series was numbered sequentially. The metadata will typically be stored as a table in a memory internal to, or accessible by, the set-top box.

Subsequent episodes in a series are intended to be watched after one another. Failure to do so means that the viewer is being shown information, such as plot details, that will spoil the enjoyment of previous episodes. The content of a subsequent episode is dependent upon content of an earlier episode because the narrative extends across multiple episodes. Episodes or programmes can be said to be linked to one another, or part of a temporal series, or sequential. The dependencies of a particular episode in a series could be the previous episode in the series or could include all episodes in the series.

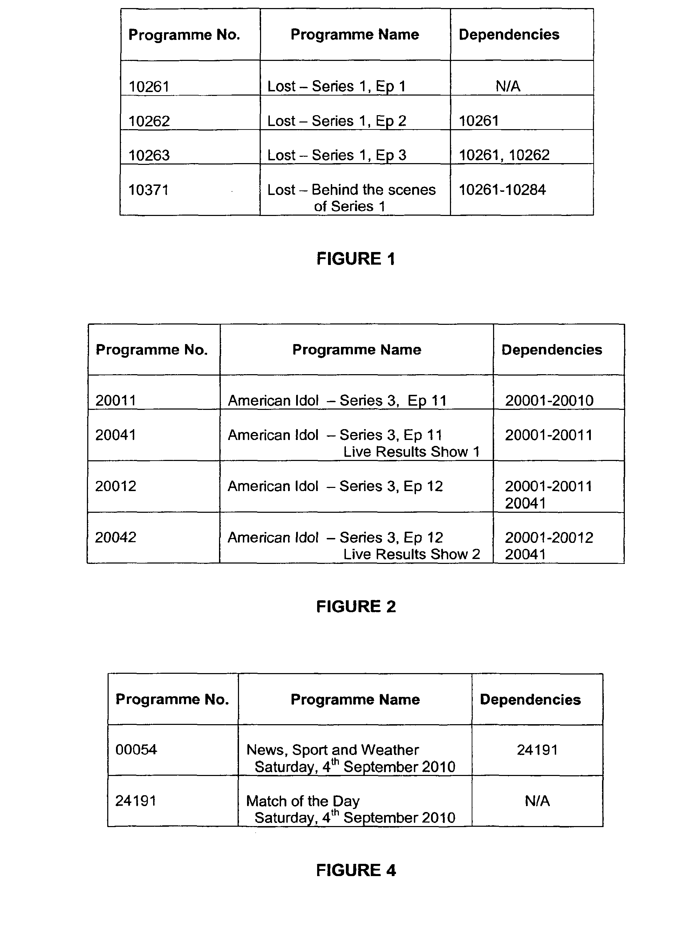

Figure 1 shows an example of how dependencies are associated with programmes. Figure 1 shows programme number, programme name and/or description and dependency data fields. The data may be contained in respective fields of metadata broadcast to the set-top box by a service provider. The dependency field identifies those programmes that should be viewed first before a particular programme is viewed. It can be seen from Figure 1 that episode 1 of series 1 of the programme "Lost" is identified by the programme number 10261. As this is the first episode in the series there is no earlier programme containing content upon which this programme is based, or extends on. The second and third episodes, identified by numbers 10262 and 10263 respectively, are dependent upon content in earlier episodes. Episode 2 is dependent upon episode 1 and so the dependency field of the table for episode 2 contains a reference to programme 10261 to identify episode 1. This reference may simply be the reference number of episode 1. The dependency is associated with episode 2 and identifies episode 1 as a programme upon which episode 2 is dependent. Likewise episode 3 is dependent upon the two earlier episodes and so on up to episode 24 (assuming 24 episodes in the series) which would be identified by the number 10284 and would be associated with a dependency field identifying programmes 10261-10283.

The dependencies can be broadcast as part of the metadata. In this case a set-top-box receives the metadata and at the point of playing a programme will perform a check of the dependency field to identify any programmes that should be watched before the programme plays. In the simplest case, if any dependencies are determined, the set-top-box will send an alert signal to the display to alert the user to this fact. The user may then decide to watch the programme or not.

If the dependencies themselves are not included in the broadcast metadata then the set-top-box can be programmed to determine the dependencies by identifying episodes within a common series and identifying earlier episodes in the dependency field of a given episode. Episodes within a particular series may be identified by programme number, but additional data is required by the set-top-box to identify those episode numbers belonging to a particular series. This additional information could be a field in the metadata, provided in the metadata broadcast or supplied later, identifying a series by a particular number, or identifying episodes belonging to a series by their range of programme numbers. Alternatively, the set-top-box could perform a search based on the text contained in one of the metadata fields, such as the programme name or description metadata field. Often, once the episodes in a series are identified, the dependencies can be identified in a straightforward manner since the episodes/programmes are labelled sequentially by programme number.

It may not always be the case that spoiler events or content are exclusively contained within earlier programmes in a series in which each programme is labelled with sequential numbers. Figure 1 shows an additional programme, "Lost - behind the scenes of series 1", which is not part of the sequential listing of programmes within the series. This programme may not be assigned the correct dependencies based upon identifying episodes in a series alone since the programme may not be considered part of the series. This could result in the viewer watching this programme before watching the other episodes in the series and spoiling the remaining episodes.

Figure 2 shows an example of a set of shows that are linked, but not necessarily broadcast with data identifying them as common in a series. The table of Figure 2 omits earlier episodes for brevity, and starts half way through a series, at which point additional episodes related to the series, but not necessarily considered part of the series, begin. The series is assumed to contain 20 episodes, with 10 additional programmes also broadcast that contain spoiler information. These additional programmes are not necessarily identified as part of the same series. The first programme, episode 11 of series 3 of "American Idol" is given programme number 20011 and provided with a dependency listing earlier episodes 1-10 in the same manner described above in relation to Figure 1. The same is true of episode 12. However, the additional "Live results" show is not numbered sequentially by programme number.

In order for the set-top-box to identify the dependencies of live results shows 20041 and 20042 the metadata could be updated with this information, such that these non-sequential programmes are listed/referenced within the dependency field of the related sequential programmes and such that their dependencies include earlier relevant sequential programmes. This would need to be done at the broadcaster's end. The metadata would then contain a field for the dependencies linking the additional programmes with the other shows in the series. Alternatively, data such as the programme name or accompanying description could be obtained from the metadata, for example from the electronic programme guide metadata. The system could perform a search, such as a keyword search, to identify related episodes, such as the live results shows, and use internal logic to determine the dependencies. For example, the system could perform a keyword search for "American Idol" or "American Idol - Series 3" and would find the "Live Results" shows. After performing a data search, the system could then compare programme data associated with a given programme with data associated with the other programmes found in the search. For example, the programme data may include broadcast sequence, time and/or date and the dependencies are set according to the order in which programmes were broadcast. The system could then check the broadcast time and/or date of the shows to identify whether they precede or follow episodes of the series, and update the dependencies accordingly. Following the example of Figure 2, the system could determine that "Live Results Show 1", programme number 20041, was broadcast on the same date as programme number 20011, but 2 hours later, and also that it was broadcast on an earlier date to programme 20012. Thus, the system determines that programme 20041 has dependencies, these being the earlier episodes in the series. This would also be useful where episodes of a series are not labelled with sequential programme numbers.

The user, or service provider, may also update the dependency information manually either remotely or by accessing the system directly. The set-top box would allow the user to input dependency data which could be used to update the appropriate metadata field, or an additional field held in a memory accessible to the set-top box, containing dependencies between a given programme and other programmes.

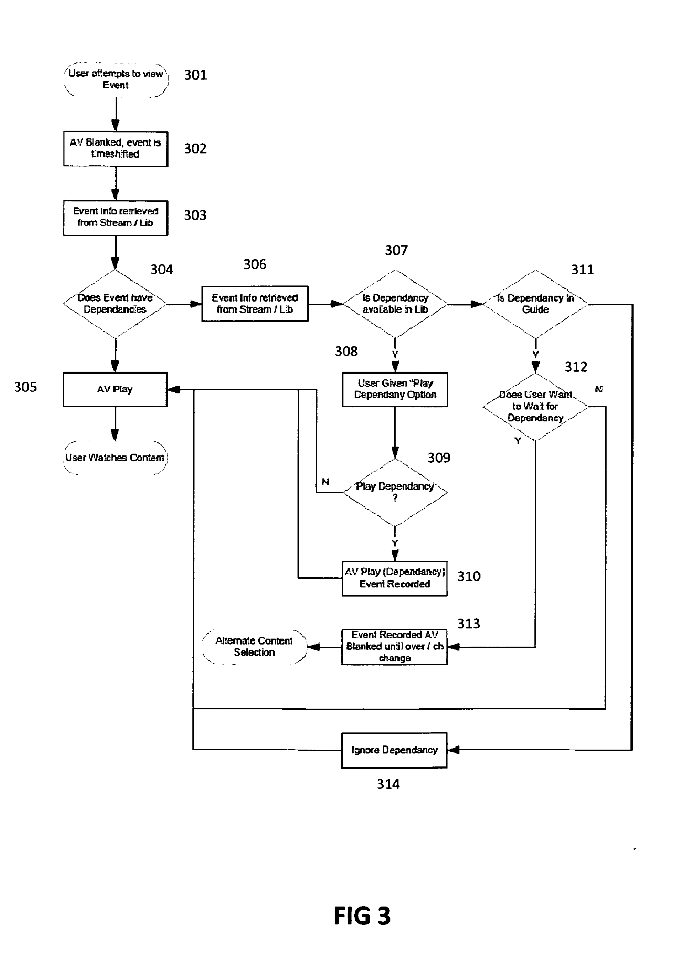

Figure 3 is a flow diagram illustrating the actions that a suitably programmed apparatus such as a set-top-box, in accordance with an embodiment of the invention, would undertake. Additional features of the invention will also be described in relation to this figure. Firstly, at step 301, the user attempts to watch an event or programme. This could involve the user changing channels, turning on the set-top-box, or a new programme starting on the channel to which the set-top-box is currently tuned.

The programme information is then retrieved either via a broadcast stream or from a library stored on a memory accessible by the set-top-box and preferably contained within the set-top-box. The programme information is contained in the metadata associated with the programme and may contain the necessary dependencies as described above, or the dependencies may be added at a later point after broadcast of the initial metadata as described above in relation to Figure 2.

The set-top-box then proceeds, at step 304, to check whether the programme that is playing, or is about to play, has any dependencies associated with it. If there are no dependencies then the content continues to be output to a display device and the user watches the programme. If, on the other hand, there are dependencies associated with the programme, the set-top-box will retrieve the data relating to the one or more dependencies, such as the programme number, at step 306.

Some set-top-boxes have access to a library of media content including stored programmes. This may be in the form of a local hard drive, an internal hard drive, or catch-up TV style library stored on a server and accessible through a communication link or network such as the Internet, cable or satellite or a local network. In the event that the set-top-box does have access to a library it will perform a check, at step 307, to determine whether the one or more dependencies are available in the library. If so, then the user can be given the option to play one or more of the programmes upon which the initial programme is dependent. A pop up screen may appear allowing the user to select the desired option via remote control or other interface devices. If the user decides to select the earlier content then this is displayed on the screen. Furthermore, the set-top-box may be configured to record the originally selected programme whilst the one or more dependencies are output to the screen. Of course, the user also has the option of ignoring the spoiler warning and viewing the programme.

If the dependency programmes are not available in a library then, at step 311, the set-top-box may search for the dependency programmes in the electronic programme guide (EPG). The EPG can be provided within broadcast metadata and contains information on the scheduling of programmes such as start time and/or date and run-time. The EPG will also contain programme identification data, such as the programme number and name, to allow programmes to be identified. If the dependency programme is found in the EPG information, the system can, at step 312, present the user with the option of waiting until the dependency programme is broadcast before watching the originally selected programme. If the user opts to wait for the dependency programme the set-top-box can optionally blank the channel output or prevent the channel from being provided to the display device to prevent the user unwittingly viewing the spoiler material. If the set-top-box has a recording function for recording programmes onto a memory as mention above, then the originally selected programme can be recorded for viewing at a later time, after the dependencies have been viewed.

If the set-top-box does not contain a programme library, and if the selected programme's dependencies are not available on the electronic programme guide, then the dependencies can be ignored, and the originally selected programme can be output without issuing a spoiler warning pop-up screen or similar.

As a further optional feature, at step 302 the audio/visual output from the set-top-box to the display device can be blanked out or prevented from being output or displayed to avoid the user viewing spoiler material unintentionally whilst the system determines if the dependency programmes are available. Rather than the user simply missing the currently playing content, in the event that the user does decide to view the originally selected programme, the set-top-box can record the programme to a memory, preferably an internal memory, so that when the system displays the programme it is time shifted and the beginning is not missed.

The set-top-box may also be configured to determine whether particular programmes have been viewed by the user. There are many different ways in which it can be determined whether the user has actually watched a programme, and any such method can be incorporated into the present invention. One example would be to determine how long a programme has been output by the set-top-box to a display device. If this exceeds a predetermined time, or a predetermined portion of the total length of the programme, such as half or two-thirds, then it is assumed by the system that the programme has been watched. The data or metadata associated with a programme can be stored in a table on a memory accessible by the set-top-box, such as an internal memory. This data can be updated with an additional field for indicating that a specific programme has been watched. This can be applied to recorded programmes, and those being received by "live" broadcast. When the set-top-box performs a check to determine if a selected programme has any associated dependencies, the box also performs a check to determine whether the dependency programmes have been previously watched. If they have, then the dependency can be ignored and the system will not issue a warning of potential spoilers.

It may be appreciated that multiple users may use a common set-top-box. In this case, each user may be assigned a profile for tracking which programmes have been viewed by that user. Each user has a profile stored in memory which is updated when they use the set-top-box. The memory may include a table that is updated to list those programmes that have previously been viewed by the user. The profile may be selected when the set-top-box is switched on, for example by selecting an appropriate icon using a remote control or other interface device. The profile may also be password protected.

However the dependency information is provided to the set-top-box, once stored it can be treated as a "permission" state, similar to parental locks based on content rating. When an action is initiated to play the program, such as by changing channel or by selecting the recorded program from a library, the set-top-box performs a series of checks to determine whether the user is "allowed" to view the content. The spoiler "permission" could be an extension of such a system. The set-top box would check the dependencies of a particular programme selected for display and determine whether the dependency programmes have previously been viewed by comparing with a stored list of viewed programmes. If the dependency programmes have not been viewed a warning can be displayed to the user.

A manner of implementing the invention will now be described in relation to the Digital Video Broadcast (DVB) MPEG-2 Standard. It will be appreciated that this is by way of example only, and the invention is not limited to such standards. As part of the MPEG transport stream programme specific information (PSI) is provided. PSI is metadata about a programme or channel and contains five tables: Programme Association Table (PAT); Conditional Access Table (CAT); Programme Map Table (PMT); Network Information Table (NIT); and Time and Date Table (TDT). Each table has a predefined structure.

Every channel/service has a PMT. When tuning to a channel, the PAT is checked by the set-top-box. The PAT is broadcast with a fixed packet ID on every transmission, so no extra information is required to find it. The PAT contains a list of services on that particular broadcast frequency, with the corresponding packet IDs of the PMT for each of those services. The term "services" includes all the viewable TV programmes and other viewable data such as interactive content, plus other information not intended to be accessed by the user such as, for example, downloadable software updates. The PMTs hold the information on a programme or service such as, for example, what video and audio streams are available and what packet IDs they are broadcast with. PMTs also contain fields that are not used for particular data and are left empty.

Within the PMT is included an entry labelled "Programme Descriptor". A descriptor is a variable-length, generally optional field. A PMT may contain a number of these Programme Descriptor fields, including Custom Descriptors, which are fields available to incorporate additional data about a programme or service. Embodiments of the invention may utilise these Custom Descriptors, or any other predetermined empty data field, to incorporate the dependency data. The set-top-box can then be programmed to search for the dependency data in a specific location, corresponding to the predetermined data field within the metadata, and extract it. The data can then be stored and used as described above and below. Generally, if a receiver unit, such as a set-top box, is not programmed to understand a given descriptor, it ignores it and jumps to the next descriptor in the loop. Therefore, descriptors for use with the present invention can be added to the metadata without preventing set-top boxes for which the invention is not intended to work from functioning correctly.

A further embodiment of the invention will now be described in relation to Figure 4. In Figure 4 the two programmes concerned are "News, Sport and Weather" and "Match of the Day". The "Match of the Day" programme contains sport matches from earlier on in the day. The "News, Sport and Weather" programme precedes "Match of the Day" and often contains the results of the sports matches to be shown in "Match of the Day". If a user intended to view "Match of the Day" but accidentally viewed the portion of the news that included the match results, their enjoyment of "Match of the day" would be compromised. This embodiment of the invention therefore accounts for the situation in which the programme metadata of a first show, programme A, is unrelated to another show, programme B, but programme A contains spoiler content relevant to programme B.

Since the shows are unrelated, a search, such as by keyword, as described in relation to Figure 2, may not work because the title and description of the two programmes may be substantially different. One option would be for the broadcaster to ensure that the metadata for the News programme lists "Match of the Day" as a dependency, although this may be difficult to achieve for all programmes for which there is a possible dependency. Instead, the set-top-box could be programmed specifically to recognise that the "News, Sport and Weather" is dependent upon "Match of the Day" (i.e. "Match of the Day" should be watched before the news), or alternatively the user could create the association manually to tell the system not to output the news before "Match of the Day" has been viewed.

As a further alternative, the set-top-box could have an input for receiving additional broadcast data from a provider. This data could include a dependency indicating that the programme about to be broadcast contains spoiler information for a programme identified in the additional broadcast data. The additional broadcast data could be transmitted by the provider as an additional service and could be done at the start of the programme or any time prior to the particular spoiler information being broadcast, including, for example, 5 minutes before or 2 minutes before. The spoiler information may not necessarily be broadcast at the start of the programme, so the additional broadcast data could be provided at any point during the run-time of the programme.

In response to the additional broadcast information, the set-top-box could automatically prevent the currently showing programme from being output. Preferably, the set-top-box also has access to a memory for storing a list of programmes for which the user does not wish to receive spoiler information. The user could thus select "Match of the Day" as a programme for which spoilers are not desired, and when the broadcaster of the "News, Sport and Weather" broadcasts the additional information indicating that spoiler information for "Match of the Day" is about to be broadcast, the set-top-box can prevent output of the news programme.

One manner in which the above could be realised would be to use a system similar to the Radio Data System (RDS) to broadcast small amounts of information such as programme identification of the programme for which spoiler information is about to be shown. In particular, a system similar to the traffic announcement/traffic programme could be used whereby, in response to receiving a particular broadcast signal, the set-top-box automatically undertakes a particular pre-programmed action. In this case the set-top-box would be programmed to impede the output of a programme, for example by changing channels or blanking the output, in response to a broadcast signal identifying the programme being played and the programme upon which it is dependent, i.e. the programme for which the current programme contains spoiler information.

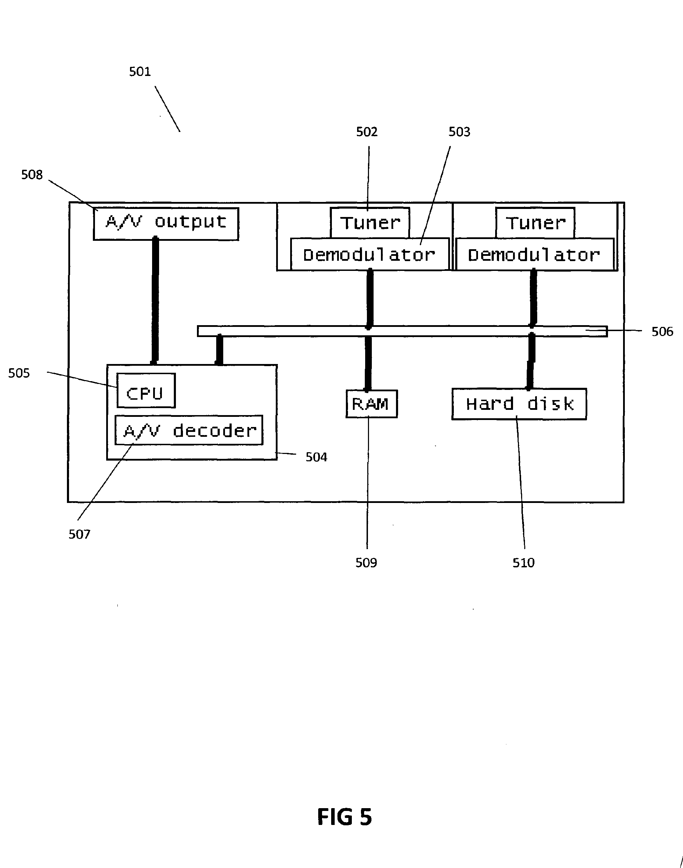

Figure 5 is a schematic diagram of the main components of a set-top-box. An embodiment of the invention, providing a set-top box for implementing the methods described above, will now be described.

The set-top box 501 comprises a receiver for receiving broadcast signals, including programme content and metadata, and providing them to a processor for decoding and outputting content. In the example of Figure 5, a tuner 502 is included that tunes to and amplifies a particular analogue broadcast frequency. A demodulator 503 then converts the signal from the tuner into a digital signal that may be processed by the microprocessors on the set-top box. The set-top box may be equipped to receive and process multiple broadcasts, such as by having n tuner/demodulator packages that can each display/record n television channels simultaneously.

The tuner/demodulator is connected to a processor chip 504, comprising a CPU 505, by a bus 506. The main microprocessor on the set-top box runs the set-top box software and controls and coordinates the other set-top box components. The A/V decoder 507 is a digital processor responsible for decoding the audio and video data and is usually provided on the same physical chip as the CPU. The AN decoder receives and decodes the signal provided by the demodulator, the decoded signals are provided to the AN output 508 which produces an audio and video signal that can be connected to an output device, such as a television. The RAM 509 can be used by both the CPU and the decoder. The hard disk 510 is provided for storing recorded content for presentation at a later time. The hard disk can also be used to store metadata and tables containing programme information such as those in Figures 1, 2 and 4. An interface, such as a remote control receiver or physical interface, is also included to allow a user to control the device.

Metadata received by broadcast is extracted by the processor and input into a table held in a memory such as hard disk 510. The memory contains a table for holding, for a given programme, a plurality of fields including the programme identification number and any programmes upon which the particular programme is dependent on. Preferably the fields also include the programme name and a description. When a programme is viewed by the user an entry is created in the table and the available information from the broadcast metadata is input into the appropriate fields. Where information, such as dependencies, is not available the processor may be arranged to determine dependencies according to any of the methods described above.

The processor may be arranged to receive data identifying programmes belonging to a particular series, and to determine dependencies by assuming that subsequent episodes will contain spoiler information for previous episodes. The processor would then input information identifying the previous episodes into the dependency field of the table for a particular episode. The processor may also be arranged to perform a search based on the text contained in one of the metadata fields, such as the programme name or description metadata field. The processor may then compare programme data associated with a given programme to data associated with the other programmes found in the search. For example, the processor may compare the broadcast time, date and/or sequence of the shows and order the shows accordingly. The, processor would then input information identifying the previous episodes in the determined order into the dependency field of the table for a particular episode. The processor may be arranged to monitor programmes that are watched by the user in the manner described above. When a programme is deemed to have been watched, the processor updates the table with a field indicative of this.

The set-top box includes a restriction circuit arranged to display a warning to a user when they are about to watch content for which there are unwatched dependencies. The restriction circuit may also prevent the output of programme content based on the dependencies, being arranged to blank out content, or prevent it from being output to, or displayed by, a display device to avoid the user viewing spoiler material unintentionally whilst the system determines if dependency programmes exist and if they are available elsewhere. The restriction circuit may be arranged to prevent the CPU from providing content to the AN output. The processor may perform the role of the restriction circuit, in which case the processor is also considered to be the restriction circuit. During any period in which the restriction circuit is preventing the display of content, the processor can be arranged to record that content to the hard disk for later viewing.

Embodiments of the invention have been described in relation to set-top-boxes for receiving and descrambling broadcast video and accompanying audio data, particularly over the air. It will be appreciated that this is not a limitation of the invention, which may equally be applied to any device for receiving and outputting media content. This would include televisions with inbuilt set-top-boxes, computers connected to the Internet or other network, mobile phones or similar mobile devices able to output media content, PDAs and so forth. The invention could also be applied to audio only devices such as radios, including digital radios.

The term "broadcasting" should also be taken to encapsulate delivery of data by any form such as over the air, via the Internet, cable or satellite or any other type of transmission.

## Claims

1. A method for controlling the output of programme content from an apparatus comprising a receiver for receiving programme content and an output, the method comprising the steps of:
- storing one or more dependencies, the dependencies being indicative of whether the content of a given programme is dependent upon the content of one or more other programmes;
- determining whether a programme to be output by the apparatus has any dependencies associated with it; and
- if the programme to be output has any dependencies associated with it, impairing the output of the programme content by the apparatus based on the dependencies.

2. A method according to claim 1 wherein the dependencies are received by the device over a broadcast or input by a user of the device.

3. A method according to claim 1 or 2 wherein the dependencies are contained in programme metadata, such as a programme map table and preferably in a "programme descriptor" field.

4. A method according to any of claims 1 to 3 wherein the dependencies are stored in a memory within the apparatus.

5. A method according to any of claims 1 to 4 wherein each programme within a series of programmes is identified by a unique reference and the dependency of the programme to be output includes a reference to one or more of any earlier programmes within the series.

6. A method according to claim 5 wherein the step of determining includes determining whether a programme reference for the programme to be output is associated with any other programme references corresponding to earlier programmes in a series.

7. A method according to any preceding claim further comprising the steps of:
- storing, in a memory, data indicative of whether a programme has been watched by a user;
- determining whether the programmes associated with the dependencies of the programme to be output by the apparatus have been viewed or listened to based on the stored data; and
- wherein if the programmes associated with the dependencies of the programme to be output have been viewed or listened to, output of the programme content is not impaired.

8. A method according to claim 7 wherein determining whether the programmes associated with the dependencies of the programme to be output have been watched comprises the steps of:
- monitoring programme data being received by broadcast or requested from a storage device; and
- storing data indicating a particular programme has been viewed or listened to when programme data of a particular programme has been output for a predetermined amount of time.

9. A method according to any preceding claim wherein impairing the output of the programme content from the device comprises time delaying the programme content by storing the content on a storage device such that it can be output at a later time.

10. A method according to any preceding claim wherein impairing the output includes outputting a warning to the user indicating that the programme to be output has dependencies and providing the user with the option to allow them to output the programme content of the programme or select alternative programme content.

11. A method according to any preceding claim further comprising the steps of:
- determining whether the one or more other programmes associated with the dependencies of the first programme are stored on a storage device accessible by the device or identified in an electronic programme guide as being broadcast within a predetermined period of time; and if so
- providing the user with the option to access the one or more other programmes.

12. A method according to claim 1 comprising the step of receiving programme data and determining the dependencies based on the received programme data.

13. An apparatus for outputting programme content, the apparatus comprising:
- one or more inputs for receiving programme content;
- an output for providing programme content to a display device;
- a memory for storing dependencies indicative of whether the content of a given programme is dependent upon the content of one or more other programmes;
- a processor configured to determine whether a programme to be output by the device has any dependencies associated with it; and
- a restriction circuit for impairing the output of programme content based on the dependencies.

14. An apparatus according to claim 13 configured to perform the method of any of claims 1 to 12.

15. A set-top-box, television, mobile phone, PDA, computer or audio device comprising an apparatus according to claim 13 or 14.

16. A computer program which when executed on the apparatus of claim 13 causes it to undertake the method of any of claims 1 to 12.
